# EUROPÄISCHE PATENTSCHRIFT

(11) **EP 0 941 829 B1**
(45) Veröffentlichungstag und Bekanntmachung des Hinweises auf die Patenterteilung: **11.12.2002**
(21) Anmeldenummer: 99104604.6
(22) Anmeldetag: 08.03.1999
(51) Int. Cl.: B29C 33/30, B29D 11/00

(54) **Formwerkzeug zur Herstellung von Präzisionsteilen, insbesondere von Kontaktlinsen**
Mould for making precision parts especially contact lenses
Moule pour la fabrication d'objets précises,notamment lentilles de contact

(30) Priorität: 10.03.1998 EP 98104272
(43) Veröffentlichungstag der Anmeldung: 15.09.1999
(73) Patentinhaber: Novartis AG, 4056 Basel (CH); Novartis-Erfindungen Verwaltungsgesellschaft m.b.H., 1235 Wien (AT)
(72) Erfinder: Bickert, Stefan, 88662 Überlingen (DE)
(74) Vertreter: Becker, Konrad

(56) Entgegenhaltungen:
- EP-A- 0 686 491
- EP-A- 0 806 286
- DE-A- 3 630 001
- DE-A- 4 020 354
- DE-A- 19 610 563
- US-A- 3 582 157
- US-A- 3 871 803
- US-A- 4 402 659

## Beschreibung

Die Erfindung betrifft ein Verfahren zur Herstellung einer Spannvorrichtung zum Einspannen eines Anlageflächen aufweisenden Teils in einen Träger.

Die Erfindung betrifft weiterhin ein Verfahren zur Herstellung eines Formwerkzeugs zur Herstellung von Präzisionsteilen, insbesondere von Kontaktlinsen, wobei das Formwerkzeug
- zwei Werkzeughälften aufweist, wobei jede Werkzeughälfte einen Werkzeugträger enthält, in welchen jeweils ein Anlageflächen aufweisender Werkzeugeinsatz mindestens eines Paares von formbestimmenden Werkzeugeinsätzen eingespannt ist, und
- Positioniermittel, durch welche die Werkzeugträger im geschlossenen Zustand des Formwerkzeugs so zueinander positioniert sind, daß die beiden Werkzeugeinsätze eines Paares von formbestimmenden Werkzeugeinsätzen einander gegenüberliegen und zur Bildung eines Formhohlraumes zusammenwirken.

Die Erfindung betrifft weiterhin eine Spannvorrichtung zum Einspannen eines Anlageflächen aufweisenden Teils in einen Träger.

Bei Formwerkzeugen zur Herstellung von Präzisionsteilen ist es sehr wichtig, daß die Werkzeugeinsätze in genau definierten und reproduzierbaren Positionen lösbar in der Trägerplatte festgehalten werden. Zu diesem Zweck dienen Spannvorrichtungen. Solche Spannvorrichtungen können aber beispielsweise auch zum Positionieren und Fixieren von Werkstücken z.B. bei der spanenden Bearbeitung eingesetzt werden, bei welcher ebenfalls ,hohe Genauigkeiten der Einspannung des Werkstücks gefordert werden.

Die Erfindung betrifft weiterhin ein Formwerkzeug zur Herstellung von Präzisionsteilen, insbesondere von Kontaktlinsen.

Bei derartigen Formwerkzeugen zur Herstellung von Kontaktlinsen wird eine sehr hohe Genauigkeit der Konzentrizität zwischen zwei einander gegenüberliegenden Werkzeugeinsätzen gefordert, wobei die Exzentrizität bei geschlossenem Formwerkzeug nicht größer als ± 5 µm sein sollte. Dies führt wiederum zu sehr hohen Genauigkeitsanforderungen der verwendeten Spannvorrichtungen. Weiterhin muß die Spannkraft der Spannvorrichtungen so groß sein, daß eine Axialkraft von > 500 N auf den Werkzeugeinsatz ausgeübt werden kann, ohne daß sich der eingespannte Werkzeugeinsatz in Axialrichtung verschiebt.

Handelsübliche Spannvorrichtungen für Werkzeugmaschinen, bei welchen ein Werkstück positioniert und fixiert wird, erfüllen in ihrem Standardprogramm nur bedingt die Genauigkeitsanforderung von < ± 5 µm.

Es sind Formwerkzeuge zur Herstellung von Kontaktlinsen bekannt, welche aus zwei Formhälften bestehen, bei welchen mehrere Paare von gegenüberliegenden formbestimmenden Formwerkzeugeinsätzen in zwei Trägerplatten angeordnet sind. Die Werkzeugeinsätze der beiden Formhälften fluchten miteinander und bilden im geschlossenen Zustand der Form zwischen sich einen Formhohlraum. Bei bekannten Formwerkzeugen zur Herstellung von Kontaktlinsen bestehen die Trägerplatten aus Aluminium. Die Formwerkzeugeinsätze werden durch Spannvorrichtungen in den Trägerplatten eingespannt. Zu diesem Zweck ist eine dünnwandige, zylindrische Spannbuchse in eine Bohrung der Trägerplatte eingesetzt und mit einem Flansch an der Trägerplatte befestigt. In der Spannbuchse sitzt eine hülsenförmige Fassung für den Werkzeugeinsatz. Die Spannbuchse bildet eine Tasche, in welche Druckmittel (Spannöl) einleitbar ist. Dadurch wird der Mantel der Spannbuchse verformt und die Fassung festgeklemmt. Zur anfänglichen Positionierung der Spannbuchse dient ein Zentrierbolzen. In den Trägerplatten können mehrere Werkzeugeinsätze, die mehrere Formhohlräume zur gleichzeitigen Herstellung mehrerer Kontaktlinsen o. dgl. bilden, in der beschriebenen Weise gehalten sein. Bei diesem bekannten Forrnwerkzeug wird eine Zentriergenauigkeit und eine Konzentrizität der eingespannten Werkzeugeinsätze von ± 5 µm erreicht.

Diese bekannten Formwerkzeuge erfordern jeweils eine große Anzahl von Bauteilen hoher Präzision. Alle Bauteile bedürfen einer aufwendigen Oberflächenbehandlung. Die Justage der in den beiden Formhälften einander gegenüberliegenden Werkzeugeinsätze zueinander ist schwierig und zeitaufwendig und damit teuer. Toleranzen der Bauteile addieren sich, so daß die Genauigkeit bei den bekannten Formwerkzeugen begrenzt ist. Die Handhabung der Formwerkzeuge erfordert aus diesem Grunde große Vorsicht. Weiterhin ist die hydraulische Spannvorrichtung platzraubend, so daß nur eine relativ geringe Anzahl von Werkzeugeinsätzen in einer bzgl. den Dimensionen vorgegebenen Trägerplatte untergebracht werden können.

Weiterhin sind keine thermische Verfahrensschritte bei diesen bekannten Formwerkzeugen zulässig. Die Längenausdehnung der Bauteile ist unterschiedlich. Dadurch wird bei Temperaturänderungen sowohl die Justage als auch die Spannkraft stark gestört. Auch der Öldruck des hydraulischen Spannsystems ändert sich bei thermischen Einflüssen.

Ein Problem ergibt sich beim Öffnen der Form. Dann können die geformten Präzisionsteile entweder von der einen oder von der anderen Formhälfte festgehalten werden. Das hängt von zufälligen, schwer zu kontrollierenden Einflüssen ab. Diese Unbestimmtheit erschwert das Herausnehmen der Präzisionsteile, insbesondere wenn dies automatisch durch einen Mechanismus geschehen soll.

Aus der DE 196 10 563 A1 ist ein Formwerkzeug zur Herstellung von Präzisionsteilen, insbesondere von Kontaktlinsen bekannt, durch welche die oben beschriebenen Nachteile behoben werden sollen. Wie bei dem oben beschriebenen Formwerkzeug besteht das Formwerkzeug aus zwei Formhälften, bei welchen mehrere Paare von gegenüberliegenden, formbestimmenden Formwerkzeugeinsätzen in Bohrungen in zwei Trägerplatten angeordnet sind. Es werden keine Spannvorrichtungen zum Einspannen der Werkzeugeinsätze in den Trägerplatten verwendet, sondern die Werkzeugeinsätze werden durch optisches Ansprengen in den Bohrungen der Trägerplatten festgehalten. Die Werkzeugeinsätze der beiden Formhälften fluchten miteinander und bilden im geschlossenen Zustand der Form zwischen sich einen Formhohlraum. Sowohl die Werkzeugeinsätze als auch die Trägerplatten bestehen aus einem Material, das in dem Arbeitstemperatur-Bereich des Formwerkzeugs eine vernachlässigbare thermische Ausdehnung hat. Es kann sich dabei um eine Glaskeramik, eine bestimmte Metall-Legierung wie "Invar" oder Quarzglas handeln. Dadurch ändert sich die Geometrie der zur Aufnahme der Formwerkzeugeinsätze dienenden Bohrungen der Trägerplatten nicht in Abhängigkeit von der Temperatur, so daß die Werkzeugeinsätze auch bei Temperaturänderungen ihre Positionen relativ zu den Trägerplatten beibehalten.

Nachteilig bei diesem in der DE 196 10 563 A1 beschriebenen Formwerkzeug ist ein aufwendiges Herstellungsverfahren. Die bei dem oben beschriebenen Formwerkzeug verwendeten, konventionellen Werkzeugeinsätze können hier nicht verwendet werden. Neuartige Werkzeugeinsätze müssen hergestellt werden, wobei die Anlageflächen sehr genau bearbeitet werden müssen, damit ein optisches Ansprengen möglich ist. Da die Verbindung zwischen den Werkzeugeinsätzen und den Trägerplatten durch optisches Ansprengen erfolgt, ist das Lösen der Werkzeugeinsätze aufwendig.

Was den sonstigen technologischen Hintergrund betrifft, so ist aus der DE-A-36 30 001 eine Führungshülse zum Zentrieren mehrerer z.B. plattenförmiger Teile einer Form bekannt. Weiterhin ist aus der DE-A-40 20 354 eine Zentrier- und Spannvorrichtung zur Verbindung zweier Bauteile (wie z.B. Platten) miteinander bekannt, speziell für Vorrichtungen wie Werkzeuge für Spritzgiessmaschinen. Ferner ist aus der EP-A-0 806 286 eine automatische Anlage zur Hydratisierung von hydrophilen Kontaktlinsen bekannt, in welcher die zu hydratisierenden Kontaktlinsen zwischen Einsätzen eingeschlossen sind, die jeweils auf zu verbindenden Trägerplatten vorgesehen sind. Auf den Trägerplatten sind Zentriermittel vorgesehen, damit beim Zusammenfügen der beiden Trägerplatten die zusammengehörenden Einsätze gegeneinander ausgerichtet sind. Die so miteinander verbundenen Trägerplatten werden in ein Bad getaucht, wodurch die Kontaktlinsen hydratisiert werden. Eine Anlage zur automatischen Herstellung von Kontaktlinsen ist aus der EP-A-0 686 491 bekannt, während die US-A-3,871,803 eine Anordnung zur gleichzeitigen Herstellung mehrerer Kunststofflinsen, insbesondere ophthalmischer Linsen zeigt. In der US-A-4,402,659 wiederum ist eine Klemmvorrichtung zur gleichmässigen Verteilung einer Klemmkraft auf die ringförmigen Anlageflächen einer zweiteiligen Kontaktlinsenform gezeigt, was dazu dient, Prisma in den Linsen und/oder Flash am Linsenrand zu vermeiden. Schliesslich ist aus der US-A-3,582,157 eine linear bewegbare Trägeranordnung bekannt, die beispielsweise einen Satz von Giessformen oder Ähnliches trägt.

Der Erfindung liegt die Aufgabe zugrunde, ein Spannvorrichtung zum Einspannen eines Teils in einen Träger zu schaffen, welche einfach aufgebaut ist und durch welche das einzuspannende Teil mit hoher Präzision in den Träger eingespannt werden kann.

Der Erfindung liegt insbesondere die Aufgabe zugrunde, ein Formwerkzeug zur Herstellung von Präzisionsteilen, insbesondere von Kontaktlinsen, zu schaffen, bei welchem Werkzeugeinsätze in einfacher Weise mit hoher Präzision in Werkzeugträgern eingespannt werden können.

Erfindungsgemäß wird diese Aufgabe durch ein Verfahren zur Herstellung einer Spannvorrichtung nach Anspruch 1 gelöst.

Des weiteren wird diese Aufgabe erfindungsgemäß durch ein Verfahren zur Herstellung eines Formwerkzeugs zur Herstellung von Prärisionsteilen, insbesondere von kontaktlinsen nach Anspruch 4 gelöst.

Erfindungsgemäß wird diese Aufgabe weiterhin durch eine Spannvorrichtung nach Anspruch 6 gelöst.

Ferner wird diese Aufgabe erfindungsgemäß durch ein Formwerkzeug zur Herstellung von Prärisionsteilen, insbesondere von Kontaktlinsen nach Anspruch 13 gelöst.

Zweckmäßige Weiterbildungen der Erfindung sind begenstand der betreffenden abhängigen Ansprüche.

Die Ausnehmung bzw. Ausnehmungen in dem Träger können Sacklochbohrungen oder durchgehende Bohrungen mit zylinderförmigen Wandungen sein. In diesem Fall können die ersten Anlageflächen der Spannmittel aus einer ringförmigen oder zylinderförmigen Mantelfläche bestehen.

Die Anlageflächen des einzuspannenden Teils bzw. des Werkzeugeinsatzes können aus einer zylinderförmigen Mantelfläche bestehen. Bei einem erfindungsgemäßen Formwerkzeug zur Herstellung von Kontaktlinsen sind die einzuspannenden Werkzeugeinsätze vorzugsweise identisch mit den Werkzeugeinsätzen, welche bei dem oben erwähnten, bekannten Formwerkzeug zur Herstellung von Kontaktlinsen verwendet werden, so daß keine neuartigen Werkzeugeinsätze hergestellt werden müssen. Die zweiten Anlageflächen der Spannmittel können in diesem Fall ringförmige oder zylinderförmige Flächen sein und können direkt an den federnden Spannelementen vorgesehen sein.

Die Ausnehmung bzw. Ausnehmungen in dem Träger können gestufte Bohrungen sein, welche eine Ringschulter bildet. Die federnden Spannelemente können von einer oder mehreren Spannscheiben gebildet sein, welche ringförmige Anlageflächen aufweisen, welche im eingespannten Zustand des einzuspannenden Teils an einer zylinderförmigen Mantelfläche des einzuspannenden Teils anliegen. Eine erste Spannscheibe kann an der Ringschulter der Bohrung anliegen. Um eine genau definierte Position dieser Spannscheibe zu erhalten, ist es jedoch vorteilhaft, zwischen der Ringschulter und dieser Spannscheibe eine Anlagescheibe vorzusehen, welche mit der Wandung der Bohrung eine scharfe Kante bildet. Die eventuell vorgesehenen, weiteren Spannscheiben können unmittelbar neben dieser ersten Spannscheibe angeordnet sein. Die Spannscheiben werden mechanisch betätigt. Dies kann durch ein Betätigungsglied in Form einer Betätigungshülse erfolgen, durch welche ein Druck auf die Spannscheiben ausgeübt wird, so daß der Spanndurchmesser des bzw. der Spannscheiben verringert wird.

Es können auch mehrere Spannscheiben in mehreren Ebenen der Ausnehmung vorgesehen sein, welche durch Abstandshalter voneinander getrennt sind. Dadurch wird das einzuspannende Teil in mehreren Ebenen eingespannt, wodurch ein Kippen des eingespannten Teils in dem Träger verhindert wird.

Die federnden Spannelemente können aber auch von einer oder mehreren Spannhülsen gebildet sein, welche zylinderförmige Anlageflächen aufweisen, welche im eingespannten Zustand des einzuspannenden Teils an einer zylinderförmigen Mantelfläche des einzuspannenden Teils anliegen. Zum Erzielen der Federwirkung der Spannhülse kann die Wandung der Spannhülse mit Schlitzen versehen sein, welche eine Veränderung des Spanndurchmessers der Spannhülse zuläßt. Die Spannhülse kann eine konische Außenfläche aufweisen. Eine mit einer komplementär dazu ausgebildeten, konischen Innenfläche versehene Zentrierhülse kann an einer Ringschulter der Bohrung anliegen. Die Spannhülse wird mechanisch betätigt, indem sie in die Zentrierhülse hineingeschoben wird, wobei die konische Außenfläche der Spannhülse mit der konischen Innenfläche der Zentrierhülse so zusammenwirkt, daß die Spannhülse um das einzuspannende Teil zusammengedrückt wird, wodurch das einzuspannende Teil festgeklemmt wird. Dies kann durch ein Betätigungsglied in Form einer Betätigungshülse erfolgen, wobei die Betätigungshülse an der Spannhülse befestigt sein kann. Da die Spannhülse mit einer relativ großen Anlagefläche an dem einzuspannenden Teil anliegt, wird ein Kippen des einzuspannenden Teils auch bei Verwendung einer einzigen Spannhülse verhindert. Weiterhin können große Haltekräfte erzeugt werden und die Flächenpressung an dem Werkzeugeinsatzes wird minimiert.

Zur Herstellung der erfindungsgemäße Spannvorrichtung bzw. des erfindungsgemäßen Formwerkzeug werden zunächst alle Bauteile mit üblichen Fertigungsverfahren unter Einhaltung üblicher Fertigungstoleranzen der Feinbearbeitung beispielsweise im Bereich von ± 0,05 mm oder sogar größer einzeln hergestellt. Sollten die so hergestellten Bauteile zur Verwendung als Spannvorrichtung bzw. Formwerkzeug zusammengebaut werden, ohne die erfindungsgemäße Bearbeitung der zweiten Anlageflächen der Spannmittel vorzunehmen, dann würden sich unzulässig große Ungenauigkeiten der Zentrierung bzw. Koaxialität der einzuspannenden Teile bzw. Werkzeugeinsätze ergeben, da sich die Toleranzen der einzelnen Bauteile addieren. Eine Fertigung der Bauteile unter Einhaltung von Fertigungstoleranzen, welche zu einer ausreichenden Genauigkeit im zusammengebauten Zustand führen, ist bei Verwendung konventioneller Fertigungstechnologien unter wirtschaftlichen Gesichtspunkten nicht möglich.

Die Erfindung beruht auf der Erkenntnis, daß Toleranzen der einzelnen Bauteile eine untergeordnete Rolle spielen. Entscheidend ist lediglich die im eingespannten Zustand des einzuspannenden Teils bzw. Werkzeugeinsatzes auftretenden Toleranzen zwischen den Anlageflächen der Spannmittel und den Anlageflächen des einzuspannenden Teils bzw. Werkzeugeinsatzes. Um diese Toleranzen klein zu halten, werden die mit üblichen Fertigungsverfahren hergestellten Bauteile dann so zusammengebaut, daß die Spannmittel bzw. die federnden Spannelemente definiert vorgespannt sind, wobei das einzuspannende Teil bzw. der Werkzeugeinsatz noch nicht eingesetzt wird. Die definierte Vorspannung der Spannelemente wird so gewählt, daß sich die zweiten Anlageflächen der Spannmittel etwa in der Stellung befinden, in welcher sie später an die Anlageflächen des einzuspannenden Teils bzw. Werkzeugeinsatzes anliegen. In dieser Position werden dann die zweiten Anlageflächen bearbeitet, beispielsweise geschliffen.

Zur Einhaltung dieser definierten Vorspannung der Spannmittel kann ein Distanzelement vorgesehen werden. Das Distanzelement kann so eingesetzt werden, daß es als Anschlag für ein Betätigungsglied zur Betätigung der Spannelemente dient. Das Distanzelement ist dabei so bemessen, daß die Spannelemente unter der gewünschten, definierten Vorspannung stehen, wenn das Betätigungsglied an dem Distanzelement anliegt. Bei dem erfindungsgemäßen Formwerkzeug bestehen die Werkzeugträger vorzugsweise aus Trägerplatten, wobei die zur Aufnahme der Werkzeugeinsätze vorgesehenen Ausnehmungen sich durch die Trägerplatte hindurch erstrecken, so daß ein Zugang zu den eingesetzten Spannmitteln von beiden Seiten der Trägerplatte möglich ist. Die Bearbeitung der zweiten Anlageflächen der Spannmittel kann dann im geschlossenen Zustand des Formwerkzeugs erfolgen, wobei die zweiten Anlageflächen der in jeweils zwei fluchtenden Ausnehmungen eingesetzten Spannmittel vorzugsweise gemeinsam bearbeitet werden. Dies kann durch Durchschleifen durch beide Ausnehmungen in einem Schleifvorgang erfolgen. Dadurch wird eine hohe Konzentrizität zwischen den zweiten Anlageflächen der Spannmittel zweier einander gegenüberliegender Ausnehmungen erreicht.

Bei einem Formwerkzeug nach der Erfindung kann ein Betätigungsglied vorhanden sein, durch welches das bzw. die federnden Spannelemente aller einem Werkzeugträger zugeordneten Spannmittel gleichzeitig betätigt werden. Dieses Betätigungsglied kann eine Platte sein, durch welche Teile der Spannmittel in die Ausnehmungen hineingeschoben werden, wenn die Platte gegen den Werkzeugträger gedrückt wird. Wenn sich die Platte dann in definierter Anlage an dem Werkzeugträger befindet und dort befestigt wird, befinden sich diese Teile der Spannmittel in genau definierten Positionen. Dadurch wird gewährleistet, daß die Spannmittel in allen Ausnehmungen des Werkzeugträgers in gleicher Weise gespannt sind, so daß die Spannkraft gleich ist.

Bei der erfindungsgemäßen Spannvorrichtung und dem erfindungsgemäßen Formwerkzeug ist die Genauigkeit der Positionierung des einzuspannenden Teils bzw. des Werkzeugeinsatzes lediglich von der Herstellgenauigkeit der zweiten Anlageflächen der Spannmittel, und nicht von einer Montage- oder Justagegenauigkeit abhängig. Dadurch entfällt eine Justage, welche im allgemeinen sehr schwierig und zeitaufwendig ist.

Das erfindungsgemäße Formwerkzeug kann sehr robust aufgebaut werden. Es sind keine hydraulischen Spannvorrichtungen vorhanden. Die Handhabung der Formwerkzeuge wird dadurch erleichtert.

Durch den einfachen und robusten Aufbau des erfindungsgemäßen Formwerkzeugs wird der Wartungs- und Reinigungsaufwand reduziert, der Rüstaufwand wird vereinfacht, das Gewicht des Formwerkzeug und die Werkzeugkosten werden reduziert und ein unempfindliches und funktionssicheres Formwerkzeug wird geschaffen. Weiterhin können thermische Verfahrensschritte durchgeführt werden und es ist möglich, das Formwerkzeug mit temperiertem Wasser zu reinigen.

Es hat sich gezeigt, daß, bei einem erfindungsgemäßen Formwerkzeug, sowohl die Zentriergenauigkeit und die Konzentrizität der eingespannten Werkzeugeinsätze als auch die Reproduzierbarkeit des Einspannens verbessert wird, wobei eine Zentriergenauigkeit und eine Konzentrizität von besser als ± 2,5 µm erreicht werden kann. Weiterhin ist die Dejustage der eingespannten Werkzeugeinsätze bei wiederholtem Aufmachen und Schließen des Formwerkzeugs kleiner.

Die erfindungsgemäße Spannvorrichtung kann mit wesentlich kleineren Abmessungen als die hydraulische Spannvorrichtung nach dem Stand der Technik hergestellt werden. Dadurch können die in einem Werkzeugträger nebeneinander angeordneten Werkzeugeinsätze wesentlich enger aneinander angeordnet werden, wodurch die Anzahl der Werkzeugeinsätze in einer Trägerplatte mit vorgegebenen Dimensionen und damit der Ausstoß an Präzisionsteilen deutlich erhöht werden kann.

Ausführungsbeispiele der Erfindung sind nachstehend unter Bezugnahme auf die zugehörigen Zeichnungen näher erläutert.
- Fig. 1: ist eine schematische Darstellung und zeigt ein Ausführungsbeispiel eines Formwerkzeugs zur Herstellung von Kontaktlinsen.
- Fig. 2: ist eine abgebrochene Schnittdarstellung und zeigt ein erstes Ausführungsbeispiel einer Spannvorrichtung mit einem eingespannten Werkzeugeinsatz,
- Fig. 3: ist eine perspektivische Explosionsdarstellung und zeigt den einzuspannenden Werkzeugeinsatz sowie Teile der Spannvorrichtung von Fig. 2.
- Fig. 4: ist eine abgebrochene Schnittdarstellung ähnlich Fig. 2 und zeigt die Spannvorrichtung von Fig. 2 in einer Position, in welcher die Spannmittel zur Bearbeitung der Anlageflächen definiert vorgespannt sind.
- Fig. 5: ist eine perspektivische Schnittdarstellung und zeigt ein zweites Ausführungsbeispiel einer Spannvorrichtung mit einem eingespannten Werkzeugeinsatz.

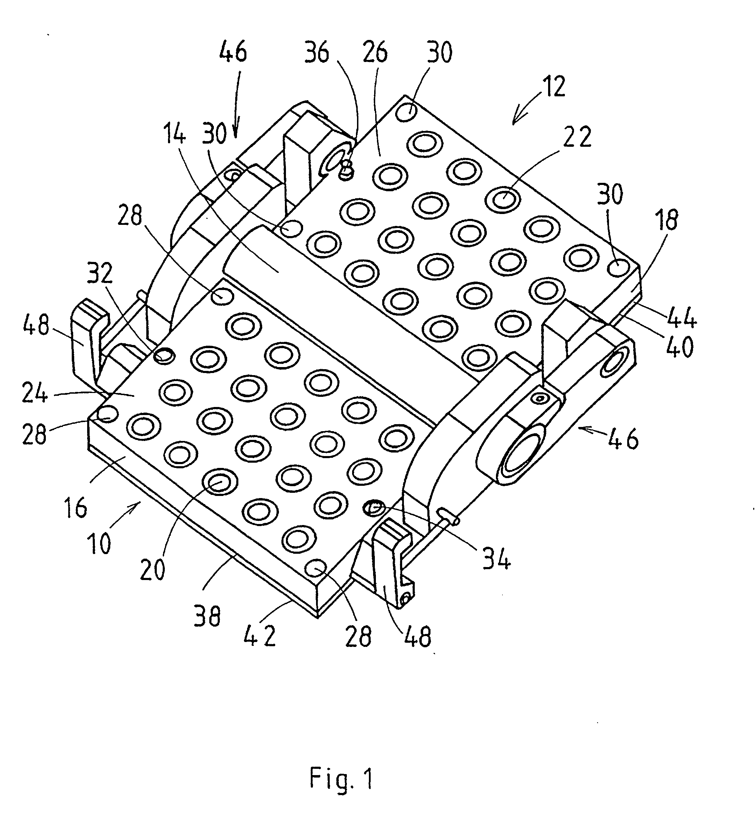

In Fig. 1 ist mit 10 eine erste Werkzeughälfte und mit 12 eine zweite Werkzeughälfte eines 20-fachen Formwerkzeugs zur Herstellung von Kontaktlinsen bezeichnet. Die beiden Werkzeughälften 10 und 12 sind durch ein Werkzeuggelenk 14 miteinander verbunden. Die erste Werkzeughälfte 10 enthält eine erste Trägerplatte 16. Die zweite Werkzeughälfte 12 enthält eine zweite Trägerplatte 18. In den Trägerplatten 16 und 18 befinden sich jeweils zwanzig Werkzeugeinsätze, von welchen zur besseren Übersicht jeweils nur ein Werkzeugeinsatz mit Bezugszeichen 20 bzw. 22 versehen ist. An den im geschlossenen Zustand des Formwerkzeugs einander zugewandten Oberseiten 24 bzw. 26 der Trägerplatten 16 und 18 sind jeweils vier Anlageflächen 28 bzw. 30 vorgesehen, von welchen jeweils nur drei in Fig. 1 sichtbar sind. An der Oberseite 24 der ersten Trägerplatte 16 sind zwei Indexbuchsen 32 und 34 vorgesehen. An der Oberseite 26 der zweiten Trägerplatte 16 sind zwei Indexbolzen 36 vorgesehen, von welchen nur der der Indexbuchse 32 zugeordneten Indexbolzen 36 in Fig. 1 sichtbar ist. An den Oberseiten 24 bzw. 26 abgewandten Unterseiten 38 bzw. 40 der Trägerplatten 24 und 26 ist jeweils eine weiter unten näher beschriebene Betätigungsplatte 42 bzw. 44 angebracht.

In Fig. 1 ist das Formwerkzeug im offenen Zustand gezeigt. Das Formwerkzeug wird geschlossen, indem die zweite Werkzeughälfte 12 um das Werkzeuggelenk 14 um 180° verschwenkt wird, so daß die Anlageflächen 30 der Trägerplatte 18 an die Anlageflächen 28 der Trägerplatte 16 zur Anlage kommen. Die Verschwenkung der Werkzeughälfte 12 erfolgt mit Hilfe einer an sich bekannten und hier nicht näher beschriebenen Bewegungsführung 46. Mittels Rasthebel 48 werden die beiden Werkzeughälften 10 und 12 definiert aneinandergehalten.

Im geschlossenen Zustand des Formwerkzeugs liegen jeweils einer der zwanzig Werkzeugeinsätze 20 der ersten Werkzeughälfte 10 und jeweils einer der zwanzig Werkzeugeinsätze 22 der zweiten Werkzeughälfte 12 einander genau gegenüber. Eine genaue Ausrichtung der Trägerplatten 16 und 18 zueinander wird durch das Zusammenwirken der Indexbolzen 36 und der Indexbuchsen 32 gewährleistet.

Die Werkzeugeinsätze 20 und 22 werden in Ausnehmungen der Trägerplatten 16 und 18 durch Spannvorrichtungen gehalten.

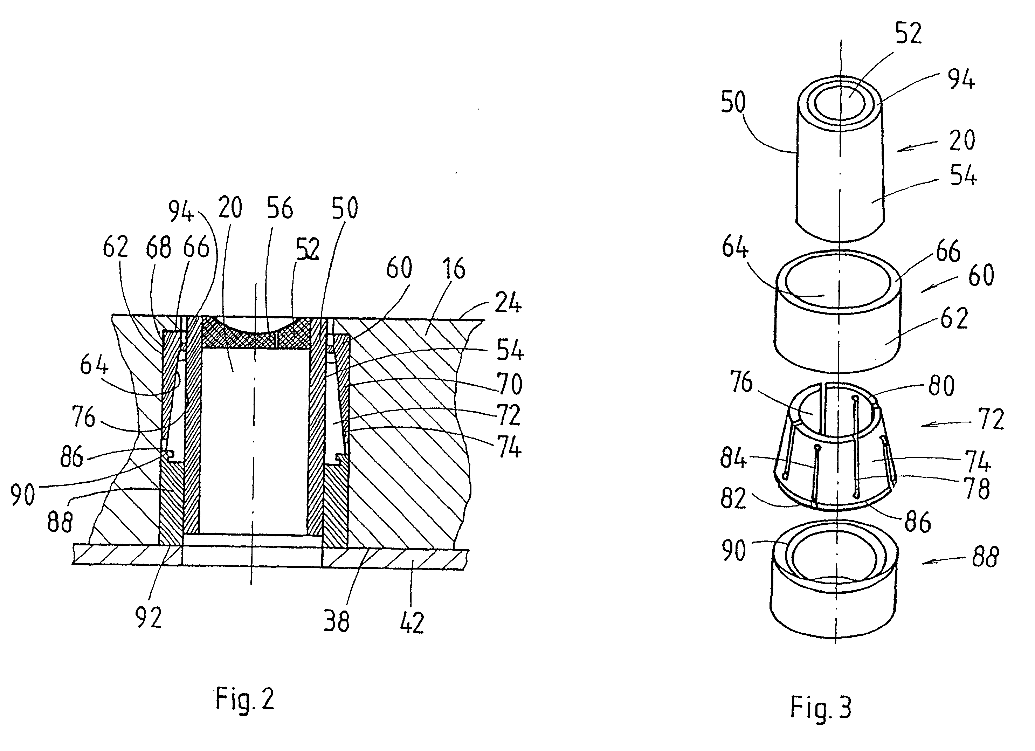

Ein erstes Ausführungsbeispiel einer solchen Spannvorrichtung soll nun anhand der Fig. 2 bis 4 und einem der Werkzeugeinsätze 20 der ersten Werkzeughälfte 10 beschrieben werden. Entsprechende Teile sind in den Fig. 2 bis 4 mit den gleichen Bezugszeichen wie in Fig. 1 versehen.

Der Werkzeugeinsatz 20 weist eine Fassung 50 auf, in welcher ein formbestimmendes Teil 52 befestigt ist. Die Außenfläche 54 der Fassung 50 ist zylinderförmig. Die Werkzeugeinsätze 22 der zweiten Werkzeughälfte 12 unterscheiden sich von den Werkzeugeinsätzen 20 der ersten Werkzeughälfte 10 nur durch die Form des formbestimmenden Teils 52, so daß die dort verwendeten Spannvorrichtungen übereinstimmend mit den Spannvorrichtungen der ersten Werkzeughälfte ausgebildet sein können. Bei dem dargestellten Formwerkzeug zur Herstellung von Kontaktlinsen hat das formbestimmende Teil 52 des Werkzeugeinsatzes 20 eine konkave formgebende Fläche 56 ("w-mould"). Das (nicht gezeigte) formbestimmende Teil des Werkzeugeinsatzes 22 hat eine konvexe formgebende Fläche ("m-mould"). Im geschlossenen Zustand des Formwerkzeugs bilden die beiden formgebenden Flächen der formbestimmenden Teile zweier einander gegenüberliegenden Werkzeugeinsätze 20 und 22 einen Formhohlraum, dessen Form der Form des herzustellenden Präzisionsteils (Kontaktlinse) entspricht. Solche Werkzeugeinsätze zur Herstellung von Kontaktlinsen sind an sich bekannt und werden auch bei den eingangs beschriebenen, mit hydraulischen Spannvorrichtungen versehenen Formwerkzeugen verwendet.

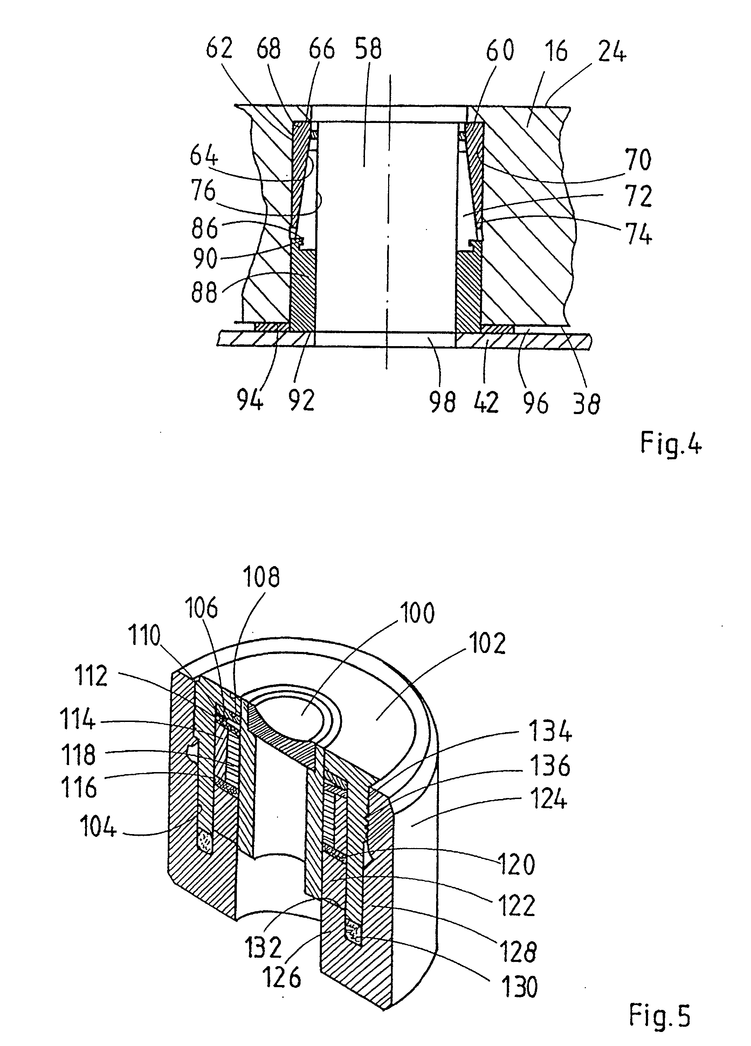

Wie aus Fig. 4 am besten erkennbar, ist in der Trägerplatte 16 eine Ausnehmung in Form einer durchgehenden, gestuften Bohrung 58 vorgesehen. In dieser Bohrung 58 ist eine Zentrierhülse 60 vorgesehen. Die Zentrierhülse 60 hat eine zylindrische Grundform mit einer zylinderförmigen Außenfläche 62 und einer sich in Fig. 2, 3 und 4 nach oben hin verjüngenden, konischen Innenfläche 64. Im eingesetzten Zustand liegt die Zentrierhülse 60 mit einer ringförmigen Stirnfläche 66 an einer Ringschulter 68 der Bohrung 58 und mit der zylinderförmigen Außenfläche 62 an der zylinderförmigen Wandung 70 der Bohrung 58 an.

In die Zentrierhülse 60 ist eine federnde Spannhülse 72 von unten in Fig. 2 eingesetzt. Die Spannhülse 72 hat eine zylindrische Grundform mit einer der Innenfläche 64 der Zentrierhülse 60 entsprechenden konischen Außenfläche 74 und einer zylinderförmigen Innenfläche 76. In der Wandung der Spannhülse 72 sind mehrere durchgehende, erste Schlitze 78 vorgesehen, welche an der in Fig. 3 oberen Stirnfläche 80 der Spannhülse 72 offen sind und sich bis kurz vor der in Fig. 3 unteren Stirnfläche 82 der Spannhülse 72 erstrecken. In der in Fig. 3 dargestellten Ausführungsform der Spannhülse 72 sind vier solche Schlitze 78 vorgesehen, welche vertikal verlaufen und gleichmäßig am Umfang der Spannhülse 72 verteilt sind. In der Wandung der Spannhülse 72 sind weiterhin mehrere durchgehende, zweite Schlitze 84 vorgesehen, welche an der in Fig. 3 unteren Stirnfläche 82 der Spann-hülse 72 offen sind und sich bis kurz vor die in Fig. 3 obere Stirnfläche 80 der Spannhülse 72 erstrecken. In der in Fig. 3 dargestellten Ausführungsform der Spannhülse 72 sind vier solche Schlitze 84 vorgesehen, welche vertikal verlaufen, gleichmäßig am Umfang der Spannhülse 72 verteilt sind und genau zwischen jeweils zwei der ersten Schlitze 78 verlaufen. Durch diese Ausbildung der Spannhülse 72 ist die Spannhülse 72 federnd in Radialrichtung, so daß der innere Durchmesser der Spannhülse 72 veränderbar ist.

In der Nähe der in Fig. 2, 3 und 4 unteren Stirnfläche 82 ist die Spannhülse 72 an der Außenfläche 74 mit einer Ringnut 86 versehen. In diese Ringnut 86 greift eine zylinderförmige Betätigungshülse 88 mit einem Ringkragen 90 ein. Der äußere und der innere Durchmesser der Betätigungshülse 88 ist so gewählt, daß die Betätigungshülse 88 in dem Zwischenraum zwischen der Wandung 70 der Bohrung 58 und der zylinderförmigen Außenfläche 54 der Fassung 50 des Werkzeugeinsatzes 20 beweglich geführt werden kann.

Das Einspannen des Werkzeugeinsatzes 20 in die Trägerplatte 16 erfolgt in folgender Weise:

Zunächst wird die Zentrierhülse 60 von unten in Fig. 2 in die Bohrung 58 eingesetzt, so daß die ringförmige Stirnfläche 66 der Zentrierhülse 60 an der Ringschulter 68 der Bohrung 58 zur Anlage kommt und die Zentrierhülse 60 in der Bohrung 58 festgeklemmt wird und somit fest mit der Trägerplatte 16 verbunden ist. Die Betätigungshülse 88 wird mit dem Ringkragen 90 in die Ringnut 86 der Spannhülse 72 eingerastet und somit an der Spannhülse 72 befestigt. Dann wird die Spannhülse 72 mit der Betätigungshülse 88 von unten in Fig. 2 in die Bohrung 58 der Trägerplatte hineingeschoben. Dabei kommt die konische Außenfläche 74 der Spannhülse 72 an die konische Innenfläche 64 der Zentrierhülse 60 zur Anlage. Das in Fig. 4 untere Ende der Betätigungshülse 88 steht etwas aus der Unterseite 38 der Trägerplatte 16 hervor. Anschließend wird der Werkzeugeinsatz 20 in die Betätigungshülse 88 und in die Spannhülse 72 (von unten oder von oben in Fig. 2) hineingeschoben, wobei die Innenfläche 76 der Spannhülse 72 an der Außenfläche 54 der Fassung 50 des Werkzeugeinsatzes 20 zur Anlage kommt. Die Betätigungsplatte 42 wird an die in Fig. 2 untere Stirnfläche 92 der Betätigungshülse 88 angelegt, gegen die Unterseite 38 der Trägerplatte 16 gedrückt und an dieser befestigt, beispielsweise angeschraubt. Dabei wird die Spannhülse 72 nach oben in Fig. 2 geschoben. Durch das Zusammenwirken der konischen Innenfläche 64 der Zentrierhülse 60 und der konischen Außenfläche 74 der Spannhülse 72 wird dabei die Spannhülse 72 um die Fassung 50 des Werkzeugeinsatzes 20 zusammengedrückt, so daß der Werkzeugeinsatz 20 festgeklemmt wird. Dabei ist darauf zu achten, daß der Werkzeugeinsatz 20 in der gewünschten axialen Position festgespannt wird. In Fig. 2 ist zu erkennen, daß dabei die obere Stirnfläche 94 der Fassung 50 des Werkzeugeinsatzes 20 mit der Oberseite 24 der Trägerplatte 16 bündig abschließt. Die durch die Federwirkung der Spannhülse 72 auf den Werkzeugeinsatz 20 wirkende Spannkraft hängt davon ab, wie weit die Spannhülse 72 in den Zentrierring 60 hineingeschoben wird. Die gewünschte, vorgegebene Spannkraft kann durch entsprechende Dimensionierung der Zentrierhülse 60, der Spannhülse 72 und der Betätigungshülse 88 erreicht werden.

Das Lösen des Werkzeugeinsatzes 20 von der Trägerplatte 16 erfolgt in einfacher Weise, indem die Betätigungsplatte 42 von der Trägerplatte 16 gelöst wird, die Spannhülse 72 etwas nach unten in Fig. 2 bewegt wird und der Werkzeugeinsatz 20 (nach unten oder nach oben in Fig. 4) aus der Bohrung 58 der Trägerplatte 16 herausgedrückt wird. Falls gewünscht, kann dann die Spannhülse 72 und die Betätigungshülse 88 ebenfalls aus der Bohrung 58 der Trägerplatte 16 herausgezogen werden.

Ein Ausführungsbeispiel eines Herstellungsverfahrens des in Fig. 2 und 3 gezeigten, ersten Ausführungsbeispiels der Spannvorrichtung soll nun anhand von Fig. 4 beschrieben werden. Die gestufte Bohrung 58 der Trägerplatte 16, die Zentrierhülse 60, die Spannhülse 72 und die Betätigungshülse 88 werden mit üblichen Fertigungsverfahren unter Einhaltung üblicher Fertigungstoleranzen der Feinbearbeitung im Bereich von ± 0,05 mm hergestellt. Anschließend wird die Zentrierhülse 60 in die Bohrung 58 der Trägerplatte 16 in ihre in Fig. 2 und 4 gezeigte Endposition gebracht, in welcher sie fest mit der Trägerplatte 16 verbunden wird. Die Spannhülse 72 wird an die Betätigungshülse 88 befestigt und zusammen mit der Betätigungshülse 88 in die Bohrung 58 der Trägerplatte 16 hineingeschoben, bis die konische Außenfläche 74 der Spannhülse 72 an der konischen Innenfläche 64 der Zentrierhülse 60 zur Anlage kommt. In dieser Position steht das in Fig. 4 untere Ende der Betätigungshülse 88 etwas aus der Unterseite 38 der Trägerplatte 16 hervor. Bevor die Betätigungsplatte 42 gegen die untere Stirnfläche 92 der Betätigungshülse 88 gedrückt und an der Trägerplatte 16 befestigt wird, wird ein Distanzring 94 zwischen die Betätigungsplatte 42 und der Trägerplatte 16 um das aus der Unterseite 38 der Trägerplatte 16 hervorstehende, in Fig. 4 untere Ende der Betätigungshülse 88 gelegt. Wenn die Betätigungsplatte 42 nun an der Trägerplatte 16 befestigt wird, entsteht zwischen der Trägerplatte 16 und der Betätigungsplatte 42 ein Spalt 96, dessen Weite der Dicke des Distanzrings 94 entspricht. Dadurch werden die Spannhülse 72 und die Betätigungshülse 88 in die Bohrung 58 der Trägerplatte 16 nur so weit hineingeschoben, daß das in Fig. 4 untere Ende der Betätigungshülse 88 entsprechend der Dicke des Distanzrings 94 aus der Unterseite 38 der Trägerplatte 16 hervorsteht. Die Dicke des Distanzrings 94 ist dabei so bemessen, daß die Spannhülse 72 dann so weit in den Zentrierring 60 hineingeschoben ist, daß sie entsprechend der späteren Verwendung so vorgespannt ist, daß die Innenfläche 76 der Spannhülse 72 etwa die gleiche Lage einnimmt, wie beim Einspannen des Werkzeugeinsatzes 20. In dieser Position erfolgt eine Endbearbeitung der Spannhülse 72, indem die Innenfläche 76 der Spannhülse 72 geschliffen wird, so daß die dadurch erzielte Form der Innenfläche 76 der Spannhülse 72 und der dadurch erzielte Spanndurchmesser der Spannhülse 72 der Form und dem äußeren Durchmesser der Fassung 50 des Werkzeugeinsatzes 20 mit hoher Genauigkeit entspricht. Anschließend wird die Betätigungsplatte 42 von der Trägerplatte 16 gelöst, der Distanzring 94 wird entfernt, die Spannhülse 72 und die Betätigungshülse 60 werden aus der Bohrung 58 der Trägerplatte 16 entfernt und die einzelnen Bauteile werden gereinigt. Es hat sich gezeigt, daß der Werkzeugeinsatz 20 mittels der so hergestellten Spannvorrichtung in die Bohrung 58 der Trägerplatte 16 mit einer sehr hohen Genauigkeit und Reproduzierbarkeit eingespannt werden kann.

Um eine gute Konzentrizität zwischen jeweils zwei im geschlossenen Zustand des Formwerkzeugs einander gegenüberliegenden Werkzeugeinsätzen 20 und 22 (Fig. 1) zu erzielen, erfolgt in einem vorteilhaften Ausführungsbeispiel die oben beschriebene Endbearbeitung der Spannhülse 72 und der entsprechenden, dem Werkzeugeinsatz 22 zugeordneten Spannhülse im geschlossenen Zustand des Formwerkzeugs. Die Spannhülse 72 wird in die Bohrung 58 der ersten Trägerplatte 16 in die in Fig. 4 gezeigten Position eingesetzt. Die dem Werkzeugeinsatz 22 zugeordnete Spannhülse wird in eine entsprechende Bohrung der zweiten Trägerplatte 18 in entsprechender Weise und Position eingesetzt. Dabei sind die Betätigungsplatten 42 und 44 mit Öffnungen 98 (Fig. 4) versehen, deren Durchmesser dem inneren Durchmesser der Betätigungshülse 88 entsprechen. Dann wird das Formwerkzeug geschlossen. Auf Grund von Fertigungstoleranzen der einzelnen Bauteile werden dabei die Innenflächen der beiden einander gegenüberliegenden Spannhülsen i.a. nicht genau miteinander fluchten. Die oben beschriebene Endbearbeitung der beiden Spannhülsen erfolgt nun gemeinsam in einem Vorgang. Zu diesem Zweck wird ein Schleifwerkzeug durch die Öffnung 98 hindurchgeführt und durch beide Trägerplatten 42 und 44 in einem Schleifvorgang durchgezogen. Dadurch wird gewährleistet, daß die Innenflächen der beiden Spannhülsen sehr genau miteinander fluchten. Wenn, wie bei dem in Fig. 1 gezeigten Formwerkzeug, die Trägerplatten 16 und 18 mit mehreren Paaren von einander gegenüberliegenden Werkzeugeinsätze 20 und 22 versehen sind, ist es natürlich vorteilhaft, erst alle den einzelnen Werkzeugeinsätzen 20 und 22 zugeordneten Spannvorrichtungen entsprechend der Fig. 4 einzusetzen, bevor die Betätigungsplatten 42 und 44 an den Trägerplatten 16 bzw. 18 in der in Fig. 4 gezeigten Position befestigt werden und die Endbearbeitung der Spannhülsen erfolgt.

In Fig. 5 ist ein zweites Ausführungsbeispiel einer Spannvorrichtung dargestellt, durch welche ein Werkzeugeinsatz 100 in einem allgemein zylinderförmigen Werkzeugträger 102 eines Einzelformwerkzeugs eingespannt wird. Der in Fig. 5 dargestellte Werkzeugeinsatz 100 kann identisch mit dem in Fig. 2 und 3 gezeigten Werkzeugeinsatz 20 sein. Wie bei dem in Fig. 1 dargestellten Formwerkzeug ist auch bei diesem Formwerkzeug ein zweiter (in den Figuren nicht dargestellter) Werkzeugträger vorhanden, in welchen ein dem Werkzeugeinsatz 22 (Fig. 1) entsprechender Werkzeugeinsatz eingespannt ist. Das Schließen dieses Formwerkzeug erfolgt durch geeignete, in den Figuren nicht dargestellte Mittel. Beispielsweise können die beiden Werkzeugträger aneinander angeflanscht werden, wobei eine genaue Ausrichtung der beiden Werkzeugträger zueinander in ähnlicher Weise wie bei dem in Fig. 1 dargestellten Formwerkzeug erfolgen kann. Im geschlossenen Zustand des Formwerkzeugs liegen die beiden Werkzeugeinsätze einander genau gegenüber.

In dem Werkzeugträger 102 ist eine Ausnehmung in Form einer durchgehenden, gestuften Bohrung 104 vorgesehen. In dieser Bohrung 104 ist eine ringförmige Anlagescheibe 106 vorgesehen. Die Anlagescheibe 106 liegt an einer Ringschulter 108 der Bohrung 104 und an der zylindrischen Wandung der Bohrung 104 an und ist dort festgeklemmt. An dem Übergang zwischen der in Fig. 5 unteren Stirnfläche der Anlagescheibe 106 und der Wandung der Bohrung 104 entsteht eine ringförmige, scharfe Kante 110.

In die Bohrung 104 des Werkzeugträgers 102 sind drei Spannscheiben 112 von unten in Fig. 5 eingesetzt. Die hier verwendeten Spannscheiben 112 sind handelsübliche Normteile mit typischen Fertigungstoleranzen von ± 10 µm (z.B. der Firma Ringspann, Bad Homburg). Die drei Spannscheiben 112 liegen an der Wandung der Bohrung 104 an, wobei die oberste der drei Spannscheiben 112 an der ringförmigen, scharfen Kante 110 anliegt, wodurch die Spannscheiben 112 eine genau definierte Lage einnehmen.

Eine zylinderförmige Abstandshülse 114 liegt mit ihrer oberen Stirnfläche an der in Fig. 5 unteren Stirnfläche der Spannscheiben 112 und mit ihrer Außenfläche an der Wandung der Bohrung 104 an. An dem Übergang zwischen der in Fig. 5 unteren Stirnfläche der Abstandshülse 114 und der Wandung der Bohrung 104 entsteht wiederum eine ringförmige, scharfe Kante 116. Der innere Durchmesser der Abstandshülse 114 ist kleiner als der innere Durchmesser der Spannscheiben 112. Eine zylinderförmige, erste Kraftübertragungshülse 118 liegt mit ihrer oberen Stirnfläche an der in Fig. 5 unteren Stirnfläche der Spannscheiben 112 und mit ihrer Außenfläche verschiebbar an der Innenfläche der Abstandshülse 114 an.

An die Abstandshülse 114 und die erste Kraftübertragungshülse 118 schließt sich eine vierte Spannscheibe 120 an, welche entsprechend den Spannscheiben 112 ausgebildet ist. Die Spannscheibe 120 liegt an der in Fig. 5 unteren Stirnfläche der ersten Kraftübertragungshülse 118, an der Wandung der Bohrung 104 und an der ringförmigen, scharfen Kante 116 an, wodurch die Spannscheibe 120 eine genau definierte Lage einnimmt.

An die vierte Spannscheibe 120 schließt sich eine zweite Kraftübertragungshülse 122 an und liegt mit ihrer oberen Stirnfläche an der vierten Spannscheibe 120 und mit ihrer Außenfläche verschiebbar an der Wandung der Bohrung 104 an.

Mit 124 ist eine allgemein zylinderförmige Betätigungshülse bezeichnet, welche ein kürzeres, inneres und ein längeres, äußeres Zylinderteil 126 bzw. 128 aufweist, welche miteinander verbunden sind. Zwischen dem inneren und dem äußeren Zylinderteil 126 bzw. 128 ist eine Ringnut 130 gebildet. Die Tiefe dieser Ringnut 130 ist so gewählt, daß in dem in Fig. 5 gezeigten, eingespannten Zustand des Werkzeugeinsatzes 100, zwischen dem Grund der Ringnut 130 und der unteren Stirnfläche des Werkzeugträgers 102 ein Ringraum entsteht. Das innere Zylinderteil 126 liegt mit einer Stirnfläche 132 an der in Fig. 5 unteren Stirnfläche der Kraftübertragungshülse 122 an. In dem in Fig. 5 oberen Bereich der Betätigungshülse 124 ist das äußere Zylinderteil 128 mit einem Innengewinde 134 versehen, welches mit einem Außengewinde 136 des Werkzeugträgers 102 zusammenwirkt.

Das Einspannen des Werkzeugeinsatzes 100 in den Werkzeugträger 102 erfolgt in folgender Weise:

Zunächst wird die Anlagescheibe 106 von unten in Fig. 5 in die Bohrung 104 eingesetzt, so daß die obere Stirnfläche der Anlagescheibe 106 an der Ringschulter 108 der Bohrung 104 zur Anlage kommt und die Anlagescheibe 106 in der Bohrung 104 festgeklemmt wird und somit fest mit dem Werkzeugträger 102 verbunden ist. Die drei Spannscheiben 112, die erste Kraftübertragungshülse 118, die Abnstandshülse 114, die vierte Spannscheibe 120 und die zweite Kraftübertragungshülse 122 werden dann von unten in Fig. 5 in die Bohrung 104 des Werkzeugträgers 102 hineingeschoben. Dabei legt sich die obere der drei Spannscheiben 112 an die scharfe Kante 110 und die vierte Spannscheibe 120 an die scharfe Kante 116 an. Durch die Abstandshülse 114 wird die vierte Spannscheibe 120 in einem bestimmten Abstand von den drei Spannscheiben 112 gehalten. Anschließend wird der Werkzeugeinsatz 100 in die Bohrung 104 des Werkzeugträgers 102 (von unten oder von oben in Fig. 5) hineingeschoben, wobei die Innenflächen der Spannscheiben 112 und 120 an der Außenfläche der Fassung des Werkzeugeinsatzes 100 zur Anlage kommt.

Die Betätigungshülse 124 wird dann auf dem Werkzeugträger 102 aufgeschraubt, bis die obere Stirnfläche des äußeren Zylinderteils 128 der Betätigungshülse 124 mit der Oberfläche des Werkzeugträgers 102 bündig abschließt. Diese Position der Betätigungshülse 124 relativ zu dem Werkzeugträger 102 kann durch eine entsprechend dimensionierte Distanzscheibe festgelegt werden, welche in die Ringnut 130 eingelegt wird und an welcher sowohl der Grund der Ringnut 130 als auch die in Fig. 5 untere Stirnfläche des Werkzeugträgers 102 zur Anlage kommen. Beim Aufschrauben der Betätigungshülse 124 auf den Werkzeugträger 102 drückt der innere Zylinderteil 126 der Betätigungshülse 124 mit der Stirnfläche 132 gegen die in Fig. 5 untere Stirnfläche der zweiten Kraftübertragungshülse 122. Dadurch wird die zweite Kraftübertragungshülse 122 nach oben in Fig. 5 gedrückt. Die von dem inneren Zylinderteil 126 auf die zweite Kraftübertragungshülse 122 ausgeübte Kraft wird durch die zweite Kraftübertragungshülse 122 auf die vierte Spannscheibe 120 und von dort über die erste Kraftübertragungshülse 118 auf die drei Spannscheiben 112 übertragen. Dadurch werden die Spannscheiben 112 und 120 gespannt, so daß sie um die Fassung des Werkzeugeinsatzes 100 herum zusammengedrückt werden, wodurch der Werkzeugeinsatz 100 festgeklemmt wird. Dabei ist darauf zu achten, daß der Werkzeugeinsatz 100 in der gewünschten axialen Position festgespannt wird. In Fig. 5 ist zu erkennen, daß dabei die obere Stirnfläche der Fassung des Werkzeugeinsatzes 100 mit der Oberseite des Werkzeugträgers 102 bündig abschließt.

Die durch die Federwirkung der Spannscheiben 112 und 120 auf den Werkzeugeinsatz 100 wirkende Spannkraft hängt u.a. davon ab, wie weit die Kraftübertragungshülsen 118 und 122 in die Bohrung 104 des Werkzeugträgers 102 hineingeschoben werden. Die gewünschte, vorgegebene Spannkraft kann also durch entsprechende Dimensionierung der Kraftübertragungshülsen 118 und 122 erreicht werden.

Das Lösen des Werkzeugeinsatzes 100 von dem Werkzeugträger 102 erfolgt in einfacher Weise, indem die Betätigungshülse 124 von dem Werkzeugträger 102 abgeschraubt wird und der Werkzeugeinsatz 100 (nach unten oder nach oben in Fig. 5) aus der Bohrung 104 herausgedrückt wird.

Das in Fig. 5 gezeigte Ausführungsbeispiel der Spannvorrichtung kann durch ein Verfahren hergestellt werden, welches dem anhand von Fig. 4 beschriebenen Verfahren ähnlich ist. Der Werkzeugträger 102, die Anlagescheibe 106, die Spannscheiben 112 und 120, die Abstandshülse 114, die Kraftübertragungshülsen 118 und 122 und die Betätigungshülse 124 werden mit üblichen Fertigungsverfahren unter Einhaltung üblicher Fertigungstoleranzen der Feinbearbeitung im Bereich von ± 0,05 mm hergestellt bzw. es werden handelsübliche Normteile verwendet. Anschließend wird die Anlagescheibe 106 in der Bohrung 104 des Werkzeugträgers 102 in ihre in Fig. 5 gezeigte Endposition gebracht, in welcher sie fest mit dem Werkzeugträger 102 verbunden ist. Die drei Spannscheiben 112, die Abstandshülse 114, die erste Kraftübertragungshülse 118, die vierte Spannscheibe 120 und die zweite Kraftübertragungshülse 122 werden dann von unten in Fig. 5 in die Bohrung 104 des Werkzeugträgers 102 hineingeschoben.

In die Ringnut 130 der Betätigungshülse 124 wird ein (in den Figuren nicht dargestellter) Distanzring eingelegt, welcher etwas dicker als der Distanzzring ist, welcher beim Einspannen des Werkzeugeinsatzes 100 verwendet werden kann. Die Betätigungshülse 124 wird dann auf den Werkzeugträger 102 aufgeschraubt, bis der Distanzring an der in Fig. 5 unteren Stirnfläche des Werkzeugträgers 102 zur Anlage kommt. Die Dicke des Distanzrings ist dabei so bemessen, daß dann die obere der drei Spannscheiben 112 an der scharfen Kante 110 und die vierte Spannscheibe 120 an der scharfen Kante 116 anliegt und die Kraftübertragungshülsen 118 und 122 so weit in die Bohrung 104 hineingeschoben sind, daß die Spannscheiben 112 und 120 entsprechend der späteren Verwendung so vorgespannt sind, daß die Innenflächen der Spannscheiben 112 und 120 etwa die gleiche Lage einnehmen wie beim Einspannen des Werkzeugeinsatzes 100. In dieser Position erfolgt eine Endbearbeitung der Spannscheiben 112 und 120, indem deren Innenflächen geschliffen werden, so daß die dadurch erzielte Form und der dadurch erzielte Spanndurchmesser der Spannscheiben 112 und 120 der Form und dem äußeren Durchmesser der Fassung des Werkzeugeinsatzes 100 mit hoher Genauigkeit entspricht. Die Betätigungshülse 124 wird dann von dem Werkzeugträger 102 gelöst, der Distanzring wird entfernt und die Spannscheiben 112 und 120, die Abstandshülse 114 und die beiden Kraftübertragungshülsen 118 und 122 werden aus der Bohrung 104 des Werkzeugträgers 102 entfernt. Die einzelnen Teile werden anschließend gereinigt. Wie bei der in Fig. 2 und 3 dargestellten Spannvorrichtung hat sich gezeigt, daß der Werkzeugeinsatz 100 mittels der so hergestellte Spannvorrichtung in die Bohrung 104 des Werkzeugträgers 102 mit einer sehr hohen Genauigkeit und Reproduzierbarkeit eingespannt werden kann.

Wie im Zusammenhang mit der Beschreibung des Herstellungsverfahrens der in Fig. 2 und 3 beschriebenen Spannvorrichtung ist es auch bei diesem Herstellungsverfahren vorteilhaft, die Endbearbeitung der Spannscheiben 112 und 120 und der entsprechenden, dem zweiten Werkzeugeinsatz zugeordneten Spannscheiben im geschlossenen Zustand des Formwerkzeugs gemeinsam in einem Vorgang durchzuführen, um eine gute Konzentrizität zwischen den beiden im geschlossenen Zustand des Formwerkzeugs einander gegenüberliegenden Werkzeugeinsätzen zu erzielen, wobei diese Endbearbeitung in entsprechender Weise erfolgt.

In einem Versuchsaufbau wurde die Koaxialität und die Exzentrizität von Werkzeugeinsätzen gemessen, welche mittels den in den Ausführungsbeispielen dargestellten Spannvorrichtungen eingespannt wurden. Es hat sich dabei gezeigt, daß eine Zentrizität und Koaxialität von < 1,8 µm und besser erreicht werden kam. Weiterhin werden so große Spannkräfte erzielt, daß die bei Formwerkzeugen zur Herstellung von Kontaktlinsen geforderte, zulässige Axialkraft von > 500 N auf den eingespannten Werkzeugeinsatz ausgeübt werden kann, ohne daß sich der Werkzeugeinsatz in Axialrichtung verschiebt.

Das in Fig. 1 dargestellte Formwerkzeug kann mit Spannvorrichtungen nach einem der Ausführungsbeispiele versehen werden. In jeder Trägerplatte 16 und 18 sind jeweils zwanzig Werkzeugeinsätze vorgesehen. (Bei Verwendung der in Fig. 5 dargestellten Spannvorrichtung entspricht dabei die zweite Kraftübertragungshülse 122 der Betätigungshülse 88.) Ansonsten ist dieses Formwerkzeug entsprechend dem beschriebenen, mit hydraulischen Spannvorrichtungen versehenen Formwerkzeug nach dem Stand der Technik aufgebaut, wobei insbesondere die Bewegungsmechanik des Formwerkzeugs (Aufklappen um eine Scharnierachse) und die äußeren Abmessungen der beiden Werk-zeughälften beibehalten worden sind, so daß die verschiedenen Stationen einer bestehen-den Produktionsanlage nicht verändert werden müssen.

Die dargestellten Ausführungsbeispiele der Spannvorrichtung sind zwar anhand eines 20-fachen Formwerkzeugs und eines Einzelformwerkzeugs beschrieben. Sie können selbstverständlich jedoch in einem beliebigen Formwerkzeug verwendet werden, bei welchem Werkzeugeinsätze in Trägern eingespannt werden.

## Patentansprüche

1. Verfahren zur Herstellung einer Spannvorrichtung zum Einspannen eines Anlageflächen (54) aufweisenden Teils (20;100) in einen Träger (16;102), mit den Verfahrensschritten:
(a) Erzeugen einer Ausnehmung (58;104) in dem Träger (16;102),
(b) Erzeugen von Spannmitteln (42,60,72,88;106,112,114,118,120,122,124), welche ein oder mehrere federnde Spannelemente (72;112,120) enthalten, erste und zweite Anlageflächen (62 bzw. 76) aufweisen und so dimensioniert sind, daß, im eingespannten Zustand des einzuspannenden Teils (20;100), die Spannmittel (42,60,72,88;106,112,114,118,120,122,124) gespannt sind und die ersten Anlageflächen (62) der Spannmittel (42,60,72,88;106,112,114,118, 120,122,124) an der Wandung (70) der Ausnehmung (58;104) und die zweiten Anlageflächen (76) der Spannmittel (42,60,72,88;106,112,114,118, 120,122,124) an den Anlageflächen (54) des einzuspannenden Teils (20;100) anliegen,
(c) Einsetzen der Spannmittel (42,60,72,88;106,112,114,118,120,122,124) in die Ausnehmung (58;104) des Trägers (16;102) in eine Position, in welcher die ersten Anlageflächen (62) der Spannmittel (42,60,72,88,108,112, 114,118, 120, 122,124) an der Wandung (70) der Ausnehmung (58;104) anliegen und *in welcher Position das bzw. die federnden Spannelemente (72;112,120)* definiert vorgespannt sind,
(d) Bearbeiten der zweiten Anlageflächen (76) der Spannmittel (42,60,72,88; 106,112,114,118,120,122,124) in dieser Position, so daß die Form der zweiten Anlageflächen (76) der Spannmittel (42,60,72,88;106,112,114,118,120,122,124) komplementär zu der Form der Anlageflächen (54) des einzuspannenden Teils (20;100) ausgebildet wird.

2. Verfahren nach Anspruch 1, **gekennzeichnet durch** das Einbringen eines Distanzelements (94) zwischen den Spannmitteln (42,60,72,88;106,112, 114,118,120,122,124), **durch** welches das bzw. die federnden Spannelemente (72;112,120) definiert vorgespannt sind, wenn die Spannmittel (42,60,72, 88;106,112,114,118, 120,122,124) in der Ausnehmung (59;104) des Trägers (16;102) eingesetzt sind.

3. Verfahren nach einem der Ansprüche 1 oder 2, **dadurch gekennzeichnet, daß** die Bearbeitung der zweiten Anlageflächen (76) der Spannmittel (42,60,72,88; 106,112,114,118,120,122,124) durch Schleifen erfolgt.

4. Verfahren zur Herstellung eines Formwerkzeugs zur Herstellung von Präzisionsteilen, insbesondere von Kontaktlinsen, wobei das Formwerkzeug
- zwei Werkzeughälften (10, 12) aufweist, wobei jede Werkzeughälfte (10, 12) einen Werkzeugträger (16 bzw. 18;102) enthält, in welchen jeweils ein Anlageflächen (54) aufweisender Werkzeugeinsatz (20 bzw. 22;100) mindestens eines Paares von formbestimmenden Werkzeugeinsätzen (20,22; 100) eingespannt ist, und
- Positioniermittel (32,36,46,48), durch welche die Werkzeugträger (16,18;102) im geschlossenen Zustand des Formwerkzeugs so zueinander positioniert sind, daß die beiden Werkzeugeinsätze (20,22;100) eines Paares von formbestimmenden Werkzeugeinsätzen (20,22;100) einander gegenüberliegen und zur Bildung eines Formhohlraumes zusammenwirken,
mit den Verfahrensschritten:
- Herstellung von Spannvorrichtungen gemäss einem der Ansprüche 1 bis 3, wobei die Träger die Werkzeugträger und die einzuspannenden Teile die Werkzeugeinsätze bilden, und wobei
(a) einer der Anzahl der vorgesehenen Paare von formbestimmenden Werkzeugeinsätzen (20,22;100) entsprechende Anzahl von im geschlossenen Zustand des Formwerkzeugs paarweise fluchtenden, durchgehenden Ausnehmungen (58; 104) in jedem der Werkzeugträger (16,18; 102) erzeugt werden,
(b) die Spannmittel (42,60,72,88;106,112,114,118,120,122,124) jeweils einer der Ausnehmungen (58;104) in den Werkzeugträgern (16,18;102) und einem der Werkzeugeinsätze (20,22;100) zugeordnet sind,
- Schließen des Formwerkzeugs,
- Bearbeiten der zweiten Anlageflächen (76) der Spannmittel (42,60,72,88;106, 112,114,118,120,122,124) in dieser geschlossenen Position, so dass die zweiten Anlageflächen (76) der in jeweils zwei fluchtenden Ausnehmungen (58;104) der Werkzeugträger (16, 18; 102) eingesetzten Spannmittel (42,60,72, 88;106,112,114,118,120,122,124) miteinander fluchten.

5. Verfahren nach Anspruch 4, **dadurch gekennzeichnet, daß** die zweiten Anlageflächen (76) der in jeweils zwei fluchtenden Ausnehmungen (58; 104) der Werkzeugträger (16,18,102) eingesetzten Spannmittel (42,60,72,88;106,112,114,118,120,122,124) gemeinsam bearbeitet werden.

6. Spannvorrichtung zum Einspannen eines Anlageflächen (54) aufweisenden Teils (20;100) in einen Träger (16;102), **gekennzeichnet durch**
(a) eine Ausnehmung (58;104) in dem Träger (16;102), und
(b) Spannmittel (42,60,72,88;106,112,114,118,120,122,124), welche ein oder mehrere federnde Spannelemente (72;112,120) enthalten, erste und zweite Anlageflächen (62 bzw. 76) aufweisen und so dimensioniert sind, daß, im eingespannten Zustand des einzuspannenden Teils (20;100), die Spannmittel (42,60,72,88;106,112,114,118,120,122,124) gespannt sind und die ersten Anlageflächen (62) der Spannmittel (42,60,72,88;106,112,114,118,120, 122,124) an der Wandung (70) der Ausnehmung (58;104) und die zweiten Anlageflächen (76) der Spannmittel (42,60,72,88;106,112,114,118,120, 122,124) an den Anlageflächen (54) des einzuspannenden Teils (20;100) anliegen, wobei
(c) bei einer definierten Vorspannung der Spannmlttel die Form der zweiten Anlageflächen (76) der Spannmittel (42,60,72,88;106,112,114,118,120,122,124) komplementär zu der Form der Anlageflächen (54) des einzuspannenden Teils (20;100) ausgebildet ist, und
(d) die Spannvorrichtung nach einem Verfahren gemäss einem der Ansprüche 1 bis 3 hergestellt ist.

7. Spannvorrichtung nach Anspruch 6, **dadurch gekennzeichnet, daß** die Anlageflächen (54) des einzuspannenden Teils (20;100) von jeweils einer zylinderförmigen Außenfläche (54) und die zweiten Anlageflächen (76) der Spannmittel (42,60,72,88;106,112,114,118,120,122,124) von einer oder mehreren ring- oder zylinderförmigen, zu der zylinderförmigen Außenfläche (54) komplementären Innenflächen (76) gebildet sind.

8. Spannvorrichtung nach einem der Ansprüche 6 oder 7, **dadurch gekennzeichnet, daß** die Spannmittel (42,60,72,88;106,112,114,118,120,122,124) eine oder mehrere Spannscheiben (112,120) enthalten.

9. Spannvorrichtung nach Anspruch 8, **dadurch gekennzeichnet, daß** zwei oder mehrere Spannscheiben (112) unmittelbar nebeneinander angeordnet sind.

10. Spannvorrichtung nach Anspruch 8 oder 9, **dadurch gekennzeichnet, daß** die Spannscheiben (112,120) in mehreren, in festgelegten Abständen voneinander befindlichen Ebenen angeordnet sind.

11. Spannvorrichtung nach einem der Ansprüche 6 bis 10, **dadurch gekennzeichnet, daß**
(a) die Spannmittel (42,60,72,88;106,112,114,118,120,122,124) eine Zentrierhülse (60) und eine in der Zentrierhülse (60) verschiebbar angeordnete Spannhülse (72) enthalten,
(b) die Zentrierhülse (60) mit einer Außenfläche (62) an der Wandung (70) der Ausnehmung (58) anliegt,
(c) die Zentrierhülse (60) eine konische Innenfläche (64) aufweist, und
(d) die Spannhülse (72) eine komplementär zu der konischen Innenfläche (64) der Zentrierhülse (60) ausgebildete, konische Außenfläche (74) aufweist, wobei
(e) im gespannten Zustand der Spannhülse (72), die Spannhülse (72) in die Zentrierhülse (60) hineingeschoben ist, so daß die konische Außenfläche (74) der Spannhülse (72) an der konischen Innenfläche (64) der Zentrierhülse (60) anliegt.

12. Spannvorrichtung nach einem der Ansprüche 6 bis 11, **dadurch gekennzeichnet, daß** die Spannmittel (42,60,72,88;106,112,114,118,120, 122,124) Betätigungsmittel (42,88;118,122,124) zur Betätigung des bzw. der federnden Spannelemente (72; 112,120) aufweisen.

13. Formwerkzeug zur Herstellung von Präzisionsteilen, insbesondere von Kontaktlinsen, **gekennzeichnet durch**
- Spannvorrichtungen gemäss einem der Ansprüche 6 bis 12, wobei die Träger als Werkzeugträger und die einzuspannenden Teile als Werkzeugeinsätze ausgebildet sind, und bei welchem Formwerkzeug
(a) zwei Werkzeughälften (10,12) vorgesehen sind, wobei jede Werkzeughälfte (10,12) einen Werkzeugträger (16 bzw. 18;102) enthält, in welchem jeweils ein Anlageflächen (54) aufweisender Werkzeugeinsatz (20 bzw. 22;100) mindestens eines Paares von formbestimmenden Werkzeugeinsätzen (20,22;100) eingespannt ist,
(b) Positioniermittel (32,36,46,48) vorgesehen sind, **durch** welche die Werkzeugträger (16,18;102) im geschlossenen Zustand des Formwerkzeugs so zueinander positioniert sind, daß die beiden Werkzeugeinsätze (20,22;100) eines Paares von formbestimmenden Werkzeugeinsätzen (20,22;100) einander gegenüberliegen und zur Bildung eines Formhohlraumes zusammenwirken,
(c) eine der Anzahl der vorgesehenen Paare von formbestimmenden Werkzeugeinsätzen (20,22;100) entsprechende Anzahl von im geschlossenen Zustand des Formwerkzeugs paarweise fluchtenden, durchgehenden Ausnehmungen (58;104) in jedem der Werkzeugträger (16,18;102) vorgesehen ist,
(d) die Spannmittel (42,60,72,88;106,112,114,118,120,122,124) jeweils einer der Ausnehmungen (58;104) in den Werkzeugträgern (16,18;102) und einem der Werkzeugeinsätze (20,22;100) zugeordnet sind,
(e) die zweiten Anlageflächen (76) der in jeweils zwei fluchtenden Ausnehmungen (58;104) der Werkzeugträger (16,18;102) eingesetzten Spannmittel bei definierter Vorspannung der Spannmittel (42,60,72,88;106,112,114,118,120,122,124) miteinander fluchten, und
(f) das Formwerkzeug nach einem Verfahren gemäss einem der Ansprüche 4 oder 5 hergestellt ist.

14. Formwerkzeug nach Anspruch 13, **dadurch gekennzeichnet, daß** die Spannmittel (42,60,72,88) ein Betätigungsglied (42) enthalten, durch welches das bzw. die federnden Spannelemente (72) aller einem Werkzeugträger (16) zugeordneten Spannmittel (42,60,72,88) gleichzeitig betätigt werden.

## Claims

1. Process for the production of a clamping means for clamping a component (20;100) having contact surfaces (54) in a holder (16;102), comprising the process steps:
(a) production of a recess (58;104) in the holder (16;102),
(b) production of clamping means (42,60,72,88;106,112,114,118,120,122,124), which contain one or more spring-action clamping elements (72;112,120), have first and second contact surfaces (62 and 76) and are of such a dimension that when the component (20;100) to be clamped is in the clamped position, the clamping means (42,60,72,88;106,112,114,118,120,122,124) are clamped and the first contact surfaces (62) of the clamping means (42,60,72,88;106,112,114,118, 120,122,124) adjoin the wall (70) of the recess (58;104) and the second contact surfaces (76) of the clamping means (42,60,72,88;106,112,114,118,120,122,124) adjoin the contact surfaces (54) of the component (20;100) to be clamped,
(c) insertion of the clamping means (42,60,72,88;106,112,114,118,120,122,124) into the recess (58;104) of the holder (16;102) in a position in which the first contact surfaces (62) of the clamping means (42,60,72,88;106,112,114,118,120,122,124) adjoin the wall (70) of the recess (58;104) and *in which position the spring-action clamping element(s) (72;112,120)* are pre-tensioned to a specific degree,
(d) finishing of the second contact surfaces (76) of the clamping means (42,60,72,88;106,112,114,118,120,122,124) in this position, so that the shape of the second contact surfaces (76) of the clamping means (42,60,72,88;106,112,114, 118,120,122,124) is complementary to the shape of the contact surfaces (54) of the component (20;100) to be clamped.

2. Process according to claim 1 or 2, **characterised by** inserting a washer (94) between the clamping means (42,60,72,88;106,112,114,118,120,122,124), by means of which the spring-action clamping element(s) (72;112,120) is or are under the defined initial tension when the clamping means (42,60,72,88;106,112,114,118,120,122,124) are inserted in the recesses (59;104) of the tool holders (16,18;104).

3. Process according to one of claims 1 or 2, **characterised in that** the second contact surfaces (76) of the clamping means (42,60,72,88;106,112,114,118,120,122,124) are finished by grinding.

4. Process for the production of a moulding tool for the production of precision articles, especially contact lenses, whereby the moulding tool has
- two tool halves (10,12), each tool half (10,12) containing a tool holder (16 and 18; 102) into each of which is clamped one tool insert (20 and 22; 100) of at least one pair of shape-determining tool inserts (20,22; 100) having contact surfaces (54), and
- positioning means (32,26,46,48), by means of which the tool holders (16,18; 102) when the moulding tool is closed are positioned relative to one another in such a way that each of a pair of shape-determining tool inserts (20,22;100) is opposite the other and interacts with the other to form a mould cavity,
with the process steps:
- production of clamping devices according to one of claims 1 to 3, whereby the holders form the tool holders and the parts to be clamped form the tool inserts, and whereby
(a) a number, corresponding to the number of pairs of shape-determining tool inserts (20,22;100), of continuous recesses (58; 104) which are aligned in pairs when the moulding tool is closed, are produced in each of the tool holders (16,18; 102),
(b) the clamping means (42,60,72,88;106,112,114,118,120,122,124) are associated with one of the recesses (58; 104) in the tool holders (16,18;102) and with one of the tool inserts (20,22;100),
- closing the moulding tool,
- finishing of the second contact surfaces (76) of the clamping means (42,60,72,88;106,112,114,118,120,122,124) in this closed position, so that the second contact surfaces (76) of the clamping means (42,60,72,88;106, 112,114,118,120,122,124) inserted in two aligned recesses (58;104) of the tool holders (16,18;102) are in alignment with one another.

5. Process according to claim 4, **characterised in that** the second contact surfaces (76) of the clamping means (42,60,72,88;106,112,114,118,120,122,124) inserted in two aligned recesses (58;104) of the tool holders (16,18,102) are finished together.

6. Clamping means for clamping a component (20;100) having contact surfaces (54) in a holder (16;102), **characterised by**
(a) a recess (58;104) in the holder (16;102), and
(b) clamping means (42,60,72,88;106,112,114,118,120,122,124), which contain one or more spring-action clamping elements (72;112,120), have first and second contact surfaces (62 and 76) and are of such a dimension that when the component (20;100) to be clamped is in the clamped position, the clamping means (42,60,72,88;106,112,114,118,120,122,124) are clamped and the first contact surfaces (62) of the clamping means (42,60,72,88;106,112,114,118,120,122,124) adjoin the wall (70) of the recess (58;104) and the second contact surfaces (76) of the clamping means (42,60,72,88;106,112,114,118,120,122,124) adjoin the contact surfaces (54) of the component (20;100) to be clamped, whereby
(c) with a defined pre-clamping of the clamping means, the shape of the second contact surfaces (76) of the clamping means (42,60,72,88;106,112,114,118, 120,122,124) is complementary to the shape of the contact surfaces (54) of the component (20;100) to be clamped, and
(d) the clamping means is produced by the process according to one of claims 1 to 3.

7. Clamping means according to claim 6, whereby the contact surfaces (54) of the component (20;100) to be clamped are formed by a cylindrical outer face (54) and the second contact surfaces (76) of the clamping means (42,60,72,88;106, 112,114,118,120,122,124) are formed by one or more annular or cylindrical inner faces (76) which are complementary to the cylindrical outer face (54).

8. Clamping means according to one of claims 6 or 7, whereby the clamping means (42,60,72,88;106, 112,114,118,120,122,124) contain one or more tightening discs (112,120).

9. Clamping means according to claim 8, whereby two or more tightening discs (112) are arranged directly next to one another.

10. Clamping means according to claim 8 or 9, whereby the tightening discs (112,120) are arranged at several levels at fixed distances from one another.

11. Clamping means according to one of claims 6 to 10, whereby
(a) the clamping means (42,60,72,88;106, 112,114,118,120,122,124) contain a centring sleeve (60) and a clamping sleeve (72) which is slidable inside the centring sleeve (60),
(b) the outer face (62) of the centring sleeve (60) adjoins the wall (70) of the recess (58),
(c) the centring sleeve (60) has a conical inner face (64), and
(d) the clamping sleeve (72) has a conical outer face (74) which is complementary to the conical inner face (64) of the centring sleeve (60), whereby
(e) when the clamping sleeve (72) is clamped, it is pushed into the centring sleeve (60), so that the conical outer face (74) of the clamping sleeve (72) adjoins the conical inner face (64) of the centring sleeve (60).

12. Clamping means according to one of claims 6 to 11, whereby the clamping means (42,60,72,88;106, 112,114,118,120,122,124) have actuating means (42;88;118,122,124) to actuate the spring-action clamping element(s) (72;112,120).

13. Moulding tool for the manufacture of precision articles, especially contact lenses, **characterised by**
- clamping means according to one of claims 6 to 12, whereby the holder is formed as a tool holder and the parts to be clamped are formed as tool inserts, and in which moulding tool
(a) two tool halves (10,12) are provided, each tool half (10,12) containing a tool holder (16 and 18; 102) into each of which is clamped one tool insert (20 and 22; 100) of at least one pair of shape-determining tool inserts (20,22; 100) having contact surfaces (54),
(b) positioning means (32,26,46,48) are provided, by means of which the tool holders (16,18; 102) in the closed state of the moulding tool are positioned relative to one another in such a way that each of a pair of shape-determining tool inserts (20,22; 100) is opposite the other and interacts with the other to form a mould cavity,
(c) there is a number, corresponding to the number of pairs of shape-determining tool inserts (20,22;100), of continuous recesses (58; 104) which are aligned in pairs when the moulding tool is closed, in each of the tool holders (16,18; 102) and
(d) the clamping means (42,60,72,88;106,112,114,118,120,122,124) are each associated with one of the recesses (58; 104) in the tool holders (16,18;102) and with one of the tool inserts (20,22;100),
(e) the second contact surfaces (76) of the clamping means (42,60,72,88;106, 112,114,118,120,122,124) inserted in two aligned recesses (58;104) of the tool holders (16,18;102) are in alignment with one another when there is defined preclamping of the clamping means, and
(g) the moulding tool is produced by the process according to one of claims 4 or 5.

14. Moulding tool according to claim 13, whereby the clamping means (42,60,72,88) contain an actuating element (42), by means of which the spring-action clamping element(s) (72) of all the clamping means (42,60,72,88) associated with a tool holder (16) are actuated simultaneously.

## Revendications

1. Procédé pour confectionner un dispositif de serrage destiné à maintenir bloquée dans un support (16; 102), une pièce (20; 100) présentant des surfaces d'appui (54), comprenant les étapes opératoires:
(a) réalisation d'un évidement (58; 104) dans le support (16; 102),
(b) réalisation de moyens de serrage (42, 60, 72, 88; 106, 112, 114, 118, 120, 122, 124), qui comportent un ou plusieurs éléments de serrage élastiques (72; 112, 120), présentent des premières et deuxièmes surfaces d'appui (62 et 76) et sont dimensionnés de telle sorte que, dans l'état maintenu bloqué de la pièce (20; 100) à maintenir bloquée, les moyens de serrage (42, 60, 72, 88; 106, 112, 114, 118, 120, 122, 124) sont serrés et que les premières surfaces d'appui (62) des moyens de serrage (42, 60, 72, 88; 106, 112, 114, 118, 120, 122, 124) portent contre la paroi (70) de l'évidement (58; 104) et les deuxièmes surfaces d'appui (76) des moyens de serrage (42, 60, 72, 88; 106, 112, 114, 118, 120, 122, 124) portent contre les surfaces d'appui (54) de la pièce (20; 100) à maintenir bloquée,
(c) insertion des moyens de serrage (42, 60, 72, 88; 106, 112, 114, 118, 120, 122, 124) dans l'évidement (58; 104) du support (16; 102), dans une position dans laquelle les premières surfaces d'appui (62) des moyens de serrage (42, 60, 72, 88, 106, 112, 114, 118, 120, 122, 124) portent contre la paroi (70) de l'évidement (58; 104), position dans laquelle le ou les éléments de serrage élastiques (72; 112, 120) sont placés sous une précontrainte définie,
(d) usinage, dans cette position, des deuxièmes surfaces d'appui (76) des moyens de serrage (42, 60, 72, 88; 106, 112, 114, 118, 120, 122, 124), d'une façon telle que la forme des deuxièmes surfaces d'appui (76) des moyens de serrage (42, 60, 72, 88; 106, 112, 114, 118, 120, 122, 124) soit rendue complémentaire de la forme des surfaces d'appui (54) de la pièce (20; 100) à maintenir bloquée.

2. Procédé selon la revendication 1, **caractérisé par** l'introduction entre les moyens de serrage (42, 60, 72, 88; 106, 112, 114, 118, 120, 122, 124), d'un élément d'écartement (94), au moyen duquel le ou les éléments de serrage élastiques (72; 112, 120) sont placés sous une précontrainte définie lorsque les moyens de serrage (42, 60, 72, 88; 106, 112, 114, 118, 120, 122, 124) sont insérés dans l'évidement (59; 104) du support (16; 102).

3. Procédé selon l'une des revendications 1 ou 2, **caractérisé en ce que** l'usinage des deuxièmes surfaces d'appui (76) des moyens de serrage (42, 60, 72, 88; 106, 112, 114, 118, 120, 122, 124) s'effectue par meulage.

4. Procédé pour confectionner un outil de moulage destiné à la production de pièces de précision, notamment de lentilles de contact, l'outil de moulage
- présentant deux moitiés d'outil (10, 12), chaque moitié d'outil (10, 12) comportant un support d'outil (16 ou 18; 102), dans lequel est maintenu bloqué un insert respectif d'outil (20 ou 22; 100), présentant des surfaces d'appui (54), d'au moins une paire d'inserts d'outil (20, 22; 100) définissant une forme, et
- des moyens de positionnement (32, 36, 46, 48), à l'aide desquels les supports d'outil (16, 18; 102) sont, dans l'état fermé de l'outil de moulage, positionnés l'un par rapport à l'autre de telle façon que les deux inserts d'outil (20, 22; 100) d'une paire d'inserts d'outil (20, 22; 100) définissant une forme, soient placés l'un en regard de l'autre et coopèrent pour former une cavité de moulage,
ledit procédé comprenant les étapes opératoires:
- confection de dispositifs de serrage conformément à l'une des revendications 1 à 3, auquel cas les supports constituent les supports d'outil et les pièces à maintenir bloquées constituent les inserts d'outil et
(a) un nombre d'évidements traversants (58; 104) s'alignant par paires dans l'état fermé de l'outil de moulage, qui correspond au nombre des paires prévues d'inserts d'outil (20, 22; 100) définissant une forme, sont réalisés dans chacun des supports d'outil (16, 18; 102),
(b) les moyens de serrage (42, 60, 72, 88; 106, 112, 114, 118, 120, 122, 124) sont respectivement associés à l'un des évidements (58; 104) réalisés dans les supports d'outil (16, 18; 102) et à l'un des inserts d'outil (20, 22; 100),
- fermeture de l'outil de moulage,
- usinage, dans cette position fermée, des deuxièmes surfaces d'appui (76) des moyens de serrage (42, 60, 72, 88; 106, 112, 114, 118, 120, 122, 124), d'une façon telle que les deuxièmes surfaces d'appui (76) des moyens de serrage (42, 60, 72, 88; 106, 112, 114, 118, 120, 122, 124) insérés chaque fois dans deux évidements respectifs (58; 104), placés en alignement, des supports d'outil (16, 18; 102), soient en alignement mutuel.

5. Procédé selon la revendication 4, **caractérisé en ce que** les deuxièmes surfaces d'appui (76) des moyens de serrage (42, 60, 72, 88; 106, 112, 114, 118, 120, 122, 124) insérés chaque fois dans deux évidements respectifs (58; 104), placés en alignement, des supports d'outil (16, 18; 102), sont usinées conjointement.

6. Dispositif de serrage pour maintenir bloquée dans un support (16; 102), une pièce (20; 100) présentant des surfaces d'appui (54), **caractérisé par**
(a) un évidement (58; 104) dans le support (16; 102), et
(b) des moyens de serrage (42, 60, 72, 88; 106, 112, 114, 118, 120, 122, 124), qui comportent un ou plusieurs éléments de serrage élastiques (72; 112, 120), présentent des premières et deuxièmes surfaces d'appui (62 et 76) et sont dimensionnés de telle sorte que, dans l'état maintenu bloqué de la pièce (20; 100) à maintenir bloquée, les moyens de serrage (42, 60, 72, 88; 106, 112, 114, 118, 120, 122, 124) sont serrés et que les premières surfaces d'appui (62) des moyens de serrage (42, 60, 72, 88; 106, 112, 114, 118, 120, 122, 124) portent contre la paroi (70) de l'évidement (58; 104) et les deuxièmes surfaces d'appui (76) des moyens de serrage (42, 60, 72, 88; 106, 112, 114, 118, 120, 122, 124) portent contre les surfaces d'appui (54) de la pièce (20; 100) à maintenir bloquée, auquel cas
(c) sous une précontrainte définie des moyens de serrage, la forme des deuxièmes surfaces d'appui (76) des moyens de serrage (42, 60, 72, 88; 106, 112, 114, 118, 120, 122, 124) est d'une configuration complémentaire de la forme des surfaces d'appui (54) de la pièce (20; 100) à maintenir bloquée, et
(d) le dispositif de serrage est confectionné selon un procédé conforme à l'une des revendications 1 à 3.

7. Dispositif de serrage selon la revendication 6, **caractérisé en ce que** les surfaces d'appui (54) de la pièce (20; 100) à maintenir bloquée sont constituées respectivement par une surface extérieure (54) de forme cylindrique et les deuxièmes surfaces d'appui (76) des moyens de serrage (42, 60, 72, 88; 106, 112, 114, 118, 120, 122, 124) sont constituées par une ou plusieurs surfaces intérieures (76) de forme annulaire ou cylindrique, complémentaires de la surface extérieure (54) de forme cylindrique.

8. Dispositif de serrage selon l'une des revendications 6 ou 7, **caractérisé en ce que** les moyens de serrage (42, 60, 72, 88; 106, 112, 114, 118, 120, 122, 124) comportent une ou plusieurs rondelles de serrage (112, 120).

9. Dispositif de serrage selon la revendication 8, **caractérisé en ce que** deux ou plus de deux rondelles de serrage (112) sont disposées directement l'une à côté de l'autre.

10. Dispositif de serrage selon la revendication 8 ou 9, **caractérisé en ce que** les rondelles de serrage (112, 120) sont disposées dans plusieurs plans se trouvant à des intervalles déterminés l'un de l'autre.

11. Dispositif de serrage selon l'une des revendications 6 à 10, **caractérisé en ce que**
(a) les moyens de serrage (42, 60, 72, 88; 106, 112, 114, 118, 120, 122, 124) comportent une douille de centrage (60) et une douille de serrage (72) montée à coulissement dans la douille de centrage (60),
(b) la douille de centrage (60) porte par une surface extérieure (62) contre la paroi (70) de l'évidement (58),
(c) la douille de centrage (60) présente une surface intérieure conique (64), et
(d) la douille de serrage (72) présente une surface extérieure conique (74) dotée d'une configuration complémentaire de celle de la surface intérieure conique (64) de la douille de centrage (60), auquel cas
(e) dans l'état serré de la douille de serrage (72), la douille de serrage (72) est poussée dans la douille de centrage (60), afin que la surface extérieure conique (74) de la douille de serrage (72) s'appuie contre la surface intérieure conique (64) de la douille de centrage (60).

12. Dispositif de serrage selon l'une des revendications 6 à 11, **caractérisé en ce que** les moyens de serrage (42, 60, 72, 88; 106, 112, 114, 118, 120, 122, 124) comprennent des moyens d'actionnement (42, 88; 118, 122, 124) destinés à actionner le ou les éléments de serrage élastiques (72; 112, 120).

13. Outil de moulage pour la production de pièces de précision, notamment de lentilles de contact, **caractérisé par**
- des dispositifs de serrage conformes à l'une des revendications 6 à 12, auquel cas les supports sont réalisés sous forme de supports d'outil et les pièces à maintenir bloquées, sous forme d'inserts d'outil, et dans l'outil de moulage,
(a) sont prévues deux moitiés d'outil (10, 12), chaque moitié d'outil (10, 12) comportant un support d'outil (16 ou 18; 102), dans lequel un insert respectif d'outil (20 ou 22; 100), présentant des surfaces d'appui (54), d'au moins une paire d'inserts d'outil (20, 22; 100) définissant une forme, est maintenu bloqué,
(b) sont prévus des moyens de positionnement (32, 36, 46, 48), à l'aide desquels les supports d'outil (16, 18; 102) sont, dans l'état fermé de l'outil de moulage, positionnés l'un par rapport à l'autre de telle façon que les deux inserts d'outil (20, 22; 100) d'une paire d'inserts d'outil (20, 22; 100) définissant une forme, soient placés l'un en regard de l'autre et coopèrent pour former une cavité de moulage,
(c) il est prévu dans chacun des supports d'outil (16, 18; 102), un nombre d'évidements traversants (58; 104) s'alignant par paires dans l'état fermé de l'outil de moulage, qui correspond au nombre des paires prévues d'inserts d'outil (20, 22; 100) définissant une forme,
(d) les moyens de serrage (42, 60, 72, 88; 106, 112, 114, 118, 120, 122, 124) sont associés respectivement à l'un des évidements (58; 104) réalisés dans les supports d'outil (16, 18; 102) et à l'un des inserts d'outil (20, 22; 100),
(e) les deuxièmes surfaces d'appui (76) des moyens de serrage insérés chaque fois dans deux évidements respectifs (58; 104), placés en alignement, des supports d'outil (16, 18; 102), sont, sous précontrainte définie des moyens de serrage (42, 60, 72, 88; 106, 112, 114, 118, 120, 122, 124), mutuellement alignées, et
(f) l'outil de moulage est confectionné selon un procédé conforme à l'une des revendications 4 ou 5.

14. Outil de moulage selon la revendication 13, **caractérisé en ce que** les moyens de serrage (42, 60, 72, 88) comportent un organe d'actionnement (42), au moyen duquel le ou les éléments de serrage élastiques (72) de tous les moyens de serrage (42, 60, 72, 88), associés à un support d'outil (16), sont actionnés simultanément.
